# EUROPEAN PATENT SPECIFICATION

(11) **EP 3 734 109 B1**
(45) Date of publication and mention of the grant of the patent: **30.06.2021**
(21) Application number: 19172018.4
(22) Date of filing: 30.04.2019
(51) Int. Cl.: F02C 3/113, F16F 15/00

(54) **METHOD AND SYSTEM FOR REDUCING CROSS-SHAFT VIBRATIONS**
VERFAHREN UND SYSTEM ZUR REDUZIERUNG VON QUERWELLENSCHWINGUNGEN
PROCÉDÉ ET SYSTÈME DE RÉDUCTION DE VIBRATIONS D'ARBRE TRANSVERSAL

(43) Date of publication of application: 04.11.2020
(73) Proprietor: Rolls-Royce Deutschland Ltd & Co KG, 15827 Blankenfelde-Mahlow (DE); Rolls-Royce plc, London N1 9FX (GB)
(72) Inventor: CICIRIELLO, Lucia, 15827 Blankenfelde-Mahlow (DE); WILSON, Matthew J., Derby DE24 8BJ, Derbyshire (GB)
(74) Representative: Maikowski & Ninnemann Patentanwälte Partnerschaft mbB

(56) References cited:
- JP-A- 2007 054 896
- US-A1- 2008 276 620
- US-A1- 2009 110 541
- US-A1- 2018 050 809
- US-B1- 8 459 038
- US-B2- 9 004 246

## Description

The present disclosure relates to a method for controlling a gas turbine, and to a gas turbine, in particular to a gas turbine engine for an aircraft.

A common problem in the field of rotating machinery is controlling the level of vibration. Vibration may be caused by imbalances of a shaft and supported rotatable elements, such as, e.g., compressor and turbine discs and blades in gas turbine engines, and also external forcing such as, e.g., aircraft maneuvers and aerodynamic forces in the aircraft. Damping systems such as fluid dampers are commonly employed to reduce vibrations.

Vibrations are specifically pronounced at particular rotational speeds and/or frequencies, known as "critical" speeds, in view of resonances of the rotating system. It is known that in multi-shaft engines critical cross shaft resonances exist, where a cross shaft resonance is a condition where excitation generated by one or more shafts are able to excite natural frequencies that generate vibration on the other shaft. It is worth noting that the common damping arrangements located at the bearing can be ineffective to reduce cross shaft vibrations.

At the critical speeds systems commonly vibrate in resonance, a condition at which vibrations are sustained by the system internal vibratory response determined by the designed stiffness, inertia and damping. The damping system is commonly designed such that its capabilities are not exceeded in use. In many cases the damping system and other components, such as a supporting structure, correspondingly have a relatively high weight. In many fields however, for example, aerospace, weight is an important consideration.

It is worth noting that damping systems typically only reduce the effects of vibrations, in particular resonances, without eliminating the cause. It should also be noted that at certain unbalances and external forcing levels, the vibrations in resonance are determined and influenced by the stiffness to inertia distribution of the whole arrangement which is generally difficult to modify.

US 8,459,038 B1 describes a speed control law and an associated characterization process and surge margin control system that provides for controlling the rotational speed N2 of a high-pressure compressor responsive to the rotational speed N1 of a low-pressure compressor so as to provide the low and high pressure compressors with sufficient surge margins over the operating range of an associated two-spool turboshaft engine. The speed control law and associated control system could be adapted to control a ratio of the rotational speeds N1, N2 of the low and high pressure compressors.

It is an object to reduce vibrations in a multi-shaft gas turbine.

According to a first aspect there is provided a method for controlling an apparatus having at least a first shaft and a second shaft that are rotatable with a variable ratio of speeds, wherein the apparatus is a gas turbine. The method comprises controlling rotation of at least one of the shafts depending on a speed ratio of speeds of the shafts. Therein, controlling rotation of the at least one of the shafts depending on the speed ratio (the speed of one of the shafts divided by the speed of another one of the shafts, wherein, e.g., the larger speed value is divided by the smaller speed value) is performed so as to avoid integer ratios of speeds of the shafts.

This is based on the finding that specific speed ratios may lead to stronger cross-shaft vibration excitations than other speed ratios. By controlling the rotation of one or more shafts of the apparatus taking into account the speed ratio, so as to avoid integer ratios of speeds of the shafts, it is possible to strongly reduce vibrations. As a result, wear of the shafts and other components may be mitigated, so that in turn their weight may be reduced and their lifetime increased. Further, also damping may be constructed lighter.

The apparatus is a gas turbine, e.g. a gas turbine engine. The shafts may transmit torque. For example, each of the shafts drives a component of the apparatus. The rotation of the shafts is defined, e.g., with respect to a stationary support structure with respect to which each of the shafts is rotatable.

Controlling rotation of the at least one of the shafts depending on the speed ratio may comprise restricting the rotation of the shafts to predetermined speed ratios. Other speed ratios, in particular speed ratios that lead to stronger cross-shaft vibrations, are excluded.

The one or more shafts are controlled to rotate only at speeds that do not lead to a predetermined speed ratio value, namely, an integer speed ratio. In other words, it may be avoided that one shaft rotates at a speed that is a multiple of the speed of another shaft. It has been found that integer speed ratios, in particular larger than 1, of two shafts of an apparatus may lead to strongly increased vibrations by cross-excitation, i.e., by driving vibrations from one shaft to one or more of the other shafts. Two shafts rotating at integer speed ratios are particularly able to generate periodic excitations that are in phase. This may excite and maintain vibrating cross-shaft resonances. By avoiding such integer speed ratios it is thus possible to strongly reduce vibrations in or of the apparatus. This can be particularly beneficial because in practice it is often difficult or impossible to model cross-shaft resonances. Other speed ratios that in a given apparatus also lead to specifically strong vibrations may be determined by simulations and/or measurements and avoided alternatively or in addition to integer (or substantially integer) ratios. Optionally, the apparatus comprises three or more shafts and the method comprises avoiding any conditions at which two pairings of the three or more shafts rotate at integer speed ratios.

The method may further comprise determining, e.g., measuring, a speed of the first shaft and/or a speed of the second shaft (and/or, optionally, the speed of a third shaft or additional shafts). By this, the current shaft speeds may be taken into account.

The method may further comprise calculating a speed ratio of the determined speeds of the first and second shafts. Controlling rotation of the at least one of the shafts may be performed depending on the calculated speed ratio (of the speeds the shafts are currently rotating).

The method may further comprise determining whether or not the calculated speed ratio is within a predetermined distance to and/or interval around an integer. In this case an adjustment of a control parameter may be triggered.

Controlling rotation of the at least one of the shafts may comprise controlling the at least one of the shafts so as to increase or decrease its speed, e.g., when the speed ratio is within the predetermined distance to or interval around a predetermined value, in particular an integer. The increase of vibrations may particularly be present in a given interval around integer numbers of the speed ratios.

Controlling the at least one of the shafts so as to increase or decrease its speed may be performed by moving a variable device of the apparatus. The variable device may be adapted to control a flow of a fluid.

As noted above, the apparatus is a gas turbine (in particular a gas turbine engine). The variable device may comprise at least one variable stator vane and/or at least one variable inlet guide vane, in particular of a compressor. By this the speed of the corresponding shaft may be increased or decreased, e.g. to avoid an integer value.

Optionally, the gas turbine is a gas turbine engine. Controlling rotation of at least one of the shafts may comprise incrementing or decrementing a power setting of the engine. By this, the speed ratio may be adjusted so as to avoid an integer value. Controlling rotation may be effected by changing a fuel flow to effect an increase or decrease in power.

The method may further comprise determining a level of vibrations at the apparatus. The level of vibrations may then be compared with a predetermined threshold. Controlling rotation of the at least one of the shafts depending on the speed ratio of the speeds of the shafts can then be performed (in particular triggered) when (e.g., only when) the level of vibrations exceeds the predetermined threshold. By this it is possible to reduce interventions, e.g. in cases where a relative level of vibrations is increased (e.g. at a peak value), but at a low absolute value. Tolerable vibrations may thus be allowed. Alternatively or in addition, integer shaft speed ratios may be tolerated (e.g. do not trigger an adjustment of a control parameter) when one or more shafts rotate at a predetermined range of speeds, e.g. speeds that were proven to not be prone to strong vibrations.

Optionally, a database may be provided, the database storing a plurality of possible operational statuses of the apparatus and (appropriate) speeds, in particular speed set points, of the shafts for each operational status (in particular having no integer ratio). The method may further comprise controlling the apparatus using the database. Alternatively or in addition to a calculation of current speed ratios of measured shaft speeds the database may initially and/or adaptively be created so that for each operational status (e.g., different power settings) one or more sets of speeds of the shafts are stored which avoid large-vibration speed ratios, in particular integer speed ratios. The database is then created depending on one or more speed ratios of speeds of the shafts, and one or more shafts of the apparatus are controlled using the database (and thus also depending on one or more shaft speed ratios). The speeds in the database may be optimized for a fuel efficiency.

Optionally, the database comprises at least one series of possible successive operational statuses and appropriate speeds of the shafts for each operational status, in particular having no integer ratio. In the example of a gas turbine engine, a series of operational statuses may be a flight profile or a part thereof. By this, crossing of integer speed ratios may be systematically avoided.

According to an aspect, a gas turbine having at least a first and a second shaft that are rotatable with a variable ratio of speeds, and having a control system for controlling the gas turbine is provided. The control system is adapted to perform the method according to any aspect or embodiment described herein.

The control system may further comprise a near-integer-speed-ratio detector for detecting a ratio of speeds at, near to (e.g. inside a predetermined interval around) and/or approaching (e.g. entering a predetermined interval around) an integer value. Optionally the control system further comprises a database storing a plurality of possible operational statuses of the gas turbine and (appropriate) speeds of the shafts for each operational status, in particular having no substantially integer ratio.

The gas turbine may be a gas turbine engine, particularly for an aircraft.

The gas turbine may further comprise a first speed sensor for determining the speed of the first shaft and a second speed sensor for determining the speed of the second shaft. The speed sensors may be operatively connected to the control system to provide shaft speed measurements to the control system.

The gas turbine may be a gas turbine engine for an aircraft. The gas turbine engine comprises an engine core comprising a turbine, a compressor, and a core shaft connecting the turbine to the compressor; a fan located upstream of the engine core, the fan comprising a plurality of fan blades; a gearbox that receives an input from the core shaft and outputs drive to the fan so as to drive the fan at a lower rotational speed than the core shaft; and the control system. For such a gas turbine the control system may particularly strongly be reducing vibrations that can occur at resonances of the gearbox.

It may be provided that the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure relates to a gas turbine engine. Such a gas turbine engine may comprise an engine core comprising a turbine, a combustor, a compressor, and a core shaft operatively connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500m to 11500 m, for example in the range of from 10600 m to 11400 m, for example in the range of from 10700 m (around 35000 ft) to 11300 m, for example in the range of from 10800 m to 11200 m, for example in the range of from 10900m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
- Figure 1: shows shaft speed ratios of a gas turbine engine with three shafts versus time during an acceleration;
- Figure 2: shows the increase of vibrations in the region of integer shaft speed ratios;
- Figure 3: shows occurrences of integer shaft speed ratios of an aircraft gas turbine engine during various test flights;
- Figure 4: is an apparatus having a control system and three shafts;
- Figures 5A and 5B: show methods for controlling an apparatus having at least a first shaft and a second shaft;
- Figures 6A and 6B: show diagrams for minimizing fuel consumption;
- Figure 7: shows a control system for controlling an apparatus having at least a first shaft and a second shaft;
- Figure 8: is a perspective view of an aircraft having a plurality of gas turbine engines;
- Figure 9: is a sectional side view of a gas turbine engine;
- Figure 10: is a partially cut-away view of a gearbox for a gas turbine engine; and
- Figure 11: is an aircraft having a plurality of gas turbine engines.

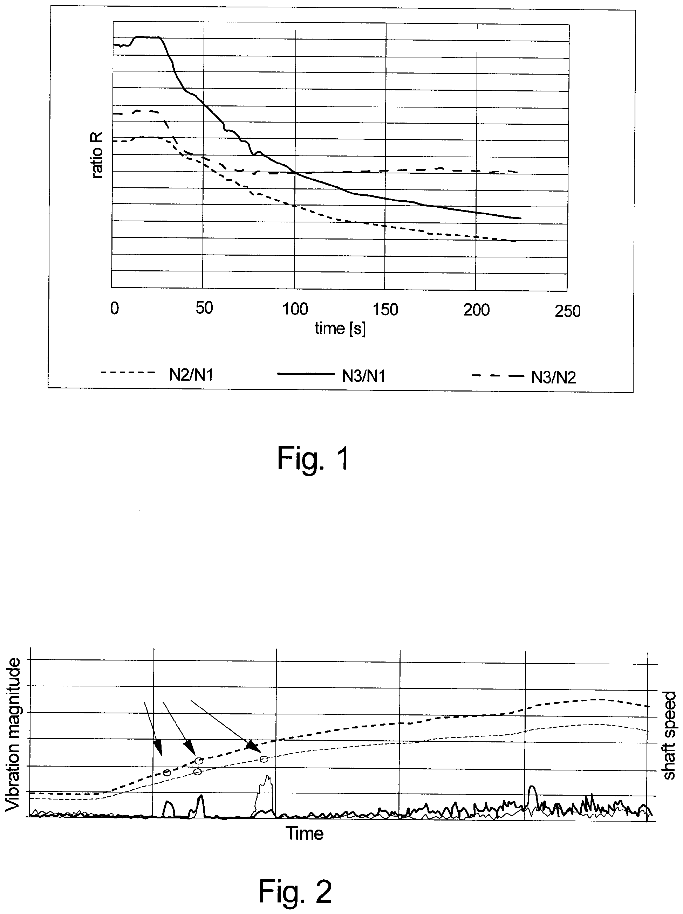

Figure 1 shows shaft speed ratios R versus time of an aircraft gas turbine engine with three shafts, herein denoted as N1-N3, during an acceleration of the engine. The three different curves show the speed ratios of the three combinations of the shafts N1-N3. The curve N3/N2 is shown at a different scale than the other two curves. From Figure 1 it becomes apparent that the shaft speed ratios R may substantially change during operation of the gas turbine engine.

Figure 2 shows in thick and thin lines and versus time shaft speeds (dashed lines) and vibration magnitudes (solid lines) of two shafts of a gas turbine engine as an example for any kind of a machinery having two or more shafts that are rotatable at variable speed ratios.

Imbalances of the shafts and/or other components may lead to vibrations of the shafts. Then, one of the shafts may excite a vibration of another one of the shafts. This occurs particularly in dependence on the ratio of the rotational speeds of the shafts.

Arrows in Figure 2 point at several occurrences of integer shaft speed ratios. It becomes clear from Figure 2 that at these points in time, the vibration magnitude at the two different shafts are strongly increased with respect to neighboring points in time where the shaft speed ratios R are far enough from an integer.

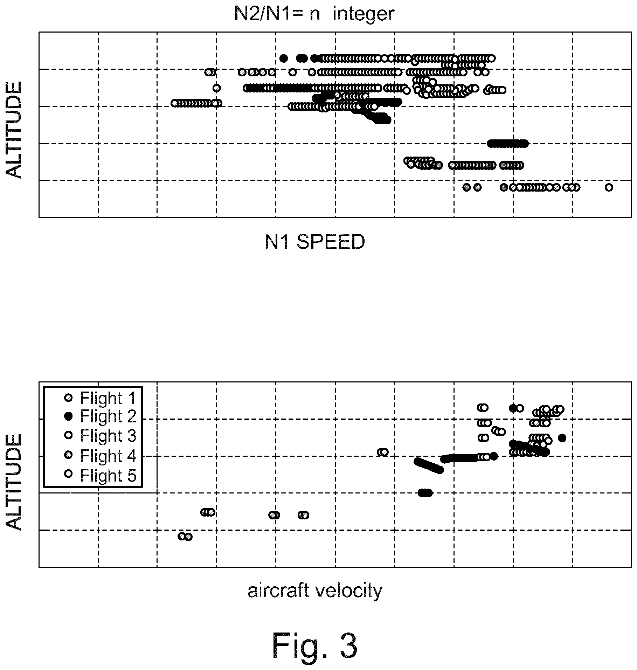

Figure 3 shows occurrences of integer shaft speed ratios of the N2 and N1 shafts in five different test flights of a gas turbine engine. The upper diagram shows the integer shaft speed ratio occurrences at different flight altitudes and versus the speed of the N1 shaft. The lower diagram shows the same versus the aircraft velocity. It becomes apparent that in specific operational statuses of the gas turbine engine integer shaft speed ratios occur more often than in others.

It is also worth noting that integer shaft speed ratios, in other words, one shaft rotating at a speed being a multiple of the speed of another shaft, are particularly prone to generate low-frequency vibrations that may generate amplitude modulations on measured engine parameters, such as speeds, vibration, air, oil and fuel intake, variable nozzle geometry, variable vane geometry, propeller or rotor pitch angle, cooling valves, torque, thrust etc., in the form of beatings. Beatings are known to be potentially detrimental when they enter an engine control loop and can be amplified by an actuation system in the attempt to minimize the error. Low frequency vibration cycles can generate a low cycle fatigue life consumption that needs to be taken into account to ensure engine structural integrity. This is addressed by control systems and methods described below.

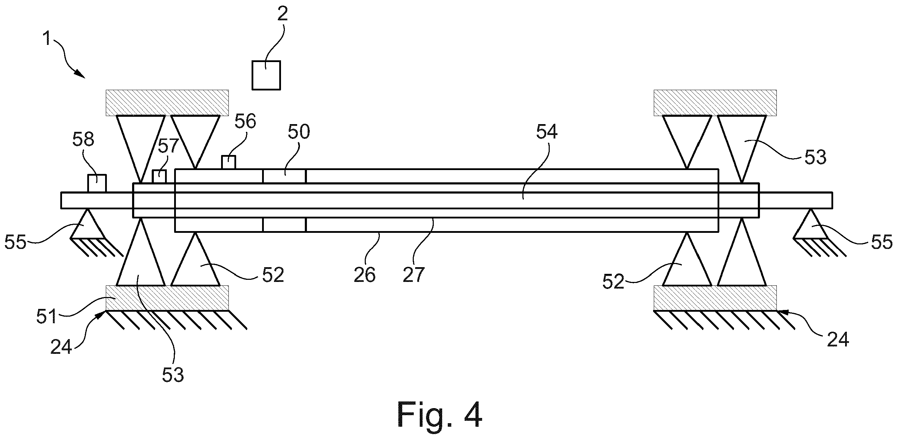

Figure 4 schematically shows an apparatus 1 comprising three shafts 26, 27, 54 and a control system 2 for controlling the apparatus 1.

The apparatus 1 comprises a stationary support structure 24 which supports a plurality of bearings 52, 53, 55. Each one of the shafts 26, 27, 54 is rotatably supported on the stationary support structure 24 by means of (a pair of) bearings 52, 53, 55. Optional damping 51 (e.g. including an oil-film damper) may be interposed between the stationary support structure 24 and one or more bearings 52, 53. An optional intershaft bearing 50 supports one shaft on another.

In the present example the shafts 26, 27, 54 are coaxially arranged and rotatable around the same axis of rotation. An outer shaft 26 surrounds an intermediate shaft 27 and an inner shaft 54. The intermediate shaft 27 surrounds the inner shaft 54.

A speed sensor 56-58 for each of the shafts 26, 27, 54 measures the rotational speed of the respective shaft 26, 27, 54 with respect to the stationary support structure 24. The speed sensors 56-58 are communicatively coupled to the control system 2.

To reduce vibrations in the apparatus 1, the control system 2 is adapted to control rotation of at least one of the shafts 26, 27, 54, in particular all of the shafts 26, 27, 54, depending on one or more speed ratios of the rotational speeds of the shafts 26, 27, 54.

The control system 2 receives speed sensor 56-58 readings and determines ratios of the shaft speeds. In case that a pair of shafts 26, 27, 54 has a speed ratio that is close to or approaching (e.g., inside or entering an interval of) an integer value, the control system 2 reacts by controlling rotation of one or more, e.g. all of the shafts 26, 27, 54 to change the respective shaft speed, so that the corresponding speed ratio is again far enough (e.g., outside the interval) from the integer value. The control system 2 particularly monitors integer values of 2, 3, 4, 5, 6 or greater.

Thus, the control system 2 is adapted to control rotation of the shafts 26, 27, 54 depending on speed ratios. In particular it is adapted to restrict the rotation of the shafts 26, 27, 54 to predetermined speed ratios.

The control system 2 may be adapted to avoid some or all possible integer shaft speed ratios, optionally for all shaft speed ranges, or for a subset of shaft speed ranges.

By avoiding integer shaft speed ratios by means of the control system 2 at least in some situations and/or at least in specific shaft speed ranges, some or all of the peaks in vibration magnitude such as shown in Figure 2 may be prevented.

The apparatus 1 may be used in a gas turbine engine, in particular it may form a part of a gas turbine engine. The gas turbine engine may be a three-shaft engine. Each of the shafts 26, 27, 54 may be driven by a turbine stage, and drive a compressor stage and/or a fan. The outer shaft 26 may also be referred to as N1 shaft, the intermediate shaft 27 may be referred to as N2 shaft and the inner shaft 54 may be referred to as N3 shaft. One of the shafts 26, 27, 54 may be referred to as a first shaft, another one as a second shaft.

The control system 2 may serve as an engine speed controller.

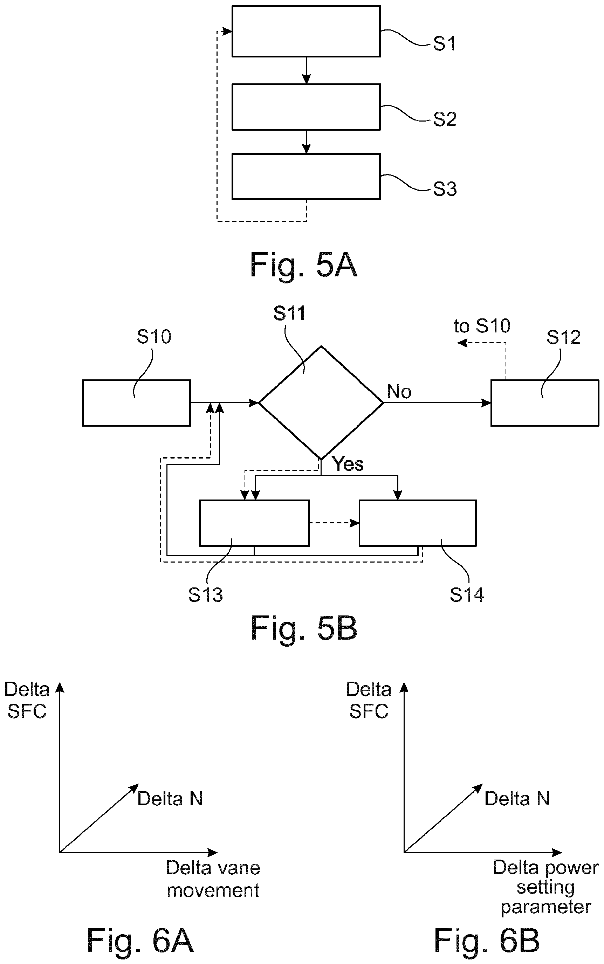

Figure 5A shows a method for controlling an apparatus having at least a first shaft and a second shaft that are rotatable with a variable ratio of speeds, e.g. the apparatus 1 according to Figure 4. The method is for reducing vibrations in the apparatus.

The method comprises a first step S1 of determining a speed of the first shaft (e.g., the outer shaft 26 or the intermediate shaft 27) and a speed of the second shaft (e.g., the intermediate shaft 27 or the inner shaft 54, respectively). In the apparatus 1 of Figure 4, this may comprise receiving, by the control system 2, sensor readings from the speed sensors 56-58.

The method further comprises a second step S2 of calculating a speed ratio R of the determined speeds of the first and second shafts (e.g., shafts 26, 27, 54) and determining whether or not the calculated speed ratio R is within a predetermined interval (e.g., +/-10% or +/- 5%) around an integer value.

The method further comprises a third step S3 of controlling rotation of the at least one of the shafts depending on the calculated speed ratio R including restricting the rotation of the shafts (e.g., shafts 26, 27, 54) to predetermined speed ratios by increasing or decreasing a speed of at least one of the shafts so as to avoid an integer ratio of speeds of the shafts.

The method may stop after the third step S3, or return to the first step S1 thereafter.

Figure 5B shows a method for controlling an apparatus in the form of a gas turbine engine, having at least a first shaft and a second shaft that are rotatable with a variable ratio of speeds, e.g. the apparatus 1 according to Figure 4.

At step S10, a power setting demand for the engine is received.

At step S11, it is evaluated whether or not the shaft speeds of the shafts of the engine are in a range for cross-excitation, e.g. at or close to an integer value, and/or whether or not the shaft speeds will enter such a range when the power setting demand is fulfilled. This may comprise performing steps S1 and S2 of Figure 5A. It may also comprise determining or predicting shaft speeds of the shafts when the power setting demand is fulfilled, and performing step S2 of Figure 5A with these shaft speeds.

If it is evaluated in step S11 that the shafts are not and/or will not be in speed ranges prone for cross-shaft excitation, the method proceeds to step S12. Otherwise the method proceeds with steps S13 and S14.

At step S12 no change in the power setting demand is made. The power setting demand is fulfilled by correspondingly controlling the engine. The method may return to step S10.

At step S13, it is evaluated whether or not a variable device of the gas turbine engine is within an acceptable range of movement. Adjustment of the variable device changes the speed of one or more of the shafts. For example, the acceptable range of movement may be a predetermined interval around a given set point. As a further example, the variable device is a variable stator vane of the gas turbine engine. The acceptable range may be in interval around a set point of the variable stator vane position, e.g. +/- 3%. The gas turbine engine may be a 3-shaft engine. In this case, the variable stator vane may be that of an intermediate-pressure shaft of the gas turbine engine, in particular of an intermediate-pressure compressor. Alternatively, the gas turbine engine may be a 2-shaft engine, in particular a geared 2-shaft engine (that may comprise a fan driven via a gearbox). In this case, the variable stator vane may be that of an intermediate-pressure compressor and/or of a high-pressure compressor of the gas turbine engine. Optionally, the gas turbine engine may be a turboprop engine, and the variable device may be a propeller pitch. The gas turbine engine may have a plurality of variable devices to be adjusted alternatively or in addition to one another in step S13. For example, a turboprop engine may have a variable propeller pitch and variable stator vanes, e.g. at a high-pressure compressor.

When the variable device is within the acceptable range of movement, the variable device is adjusted (within the acceptable range) so that the speed of the shaft is changed, particularly in such a way that the shafts do not enter or exit the speed range prone for cross-shaft excitation. Otherwise, the variable device is not adjusted in step S13.

At step S14, it is evaluated whether or not a current power setting demand is within an acceptable range around the power setting demand received in step S10, e.g. +/-1%. When this is the case, the current power setting demand overrides the power setting demand received in step S10. In other words, a received power setting demand is modified (within a predetermined range) so as to avoid shaft speed ranges prone for cross-shaft excitation. When the current power setting demand is not within an acceptable range around the power setting demand received in step S10 (or at an edge of the range), the power setting demand is not modified in step S14.

Steps S13 and S14 may be performed in parallel. Alternatively, the steps may be performed one after the other, e.g. first step S13, then step S14, as indicated in Figure 5B. Optionally, the performance of one step depends on the outcome of the other step. For example, step S14 is only performed when an adjustment (or when no adjustment) has been made in step S13 or vice versa.

It is noted that alternative embodiments of the method comprise step S13, but not step S14, or step S14, but not step S13.

After steps S13 and/or S14, the method returns to step S11.

Steps S13 and S14 are performed depending on a speed ratio of speeds of the shafts and thus control rotation of at least one of the shafts of the gas turbine engine depending on a speed ratio of speeds of the shafts.

Optionally, steps S13 and S14 are performed in combination to move the adjustable device within the acceptable range and, additionally, modify the power setting demand within its acceptable range. This allows to optimize a specific fuel consumption (SFC) of the gas turbine engine.

It is thus possible to maintain an optimized engine performance while minimizing or eliminating integer speed conditions from a flight envelope.

Optionally, integer shaft speed ratios are only avoided in specific shaft speed ranges and/or during transient integer speed maneuvers.

Cross-shaft vibrations may occur when forces from a shaft are transmitted via a static structure, optional intershaft bearings and optional fluid, and excite a resonance of another shaft which happens to exist at the given speed condition.

Figures 6A and 6B show corresponding diagrams to indicate a change of the SFC ("delta SFC") depending on a variable stator vane adjustment ("delta vane movement") and a shaft speed change ("delta N"), see Figure 6A, and on a power setting demand adjustment ("delta power setting parameter") and the shaft speed change ("delta N"), see Figure 6B. For a given gas turbine engine the specific curves of the diagrams of Figures 6A and 6B are determined by measurements and/or simulations. When performing steps S13 and S14, a change in shaft speed ("delta N") is given (e.g., the change of the shaft speed necessary to exit the region of cross-shaft excitation) and the variable stator vane adjustment and power setting demand adjustment are modified so as to minimize the SFC.

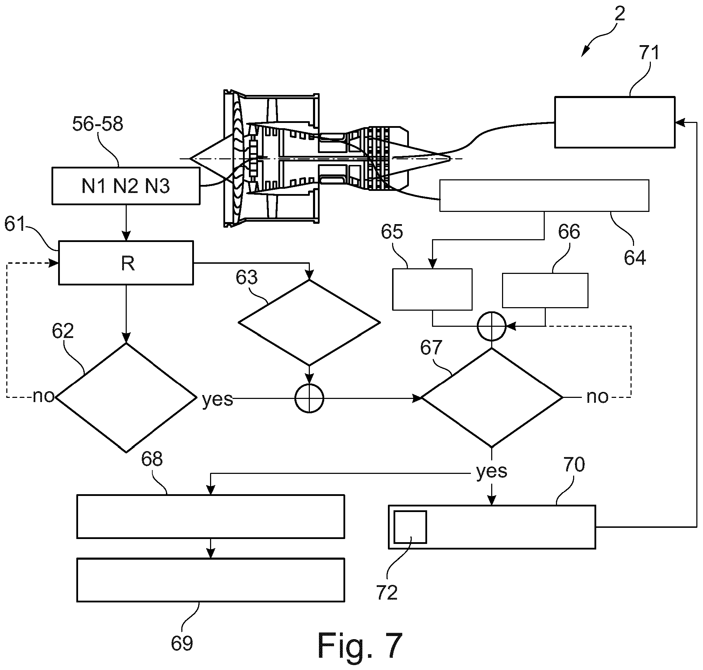

Figure 7 shows a control system for controlling an apparatus (e.g., the apparatus 1 of Figure 4) having at least a first shaft and a second shaft, the shafts being rotatable with a variable ratio of speeds. In Figure 7, the apparatus is shown as a gas turbine engine, but other types of apparatuses are also conceivable.

The apparatus comprises at least one speed encoder or speed sensor 56-58 for each of the shafts to determine the speed of the respective shaft. Optionally, the speed sensors 56-58 may be regarded as a part of the control system 2, or as a part of an arrangement comprising the control system 2 and the speed sensors 56-58.

The speed sensors 56-58 (e.g., periodically or continuously) provide sensor readings indicative for the shaft speeds to a calculator 61 of the control system 2. The calculator 61 determines one or more shaft speed ratios R, e.g. a shaft speed ratio R for each combination of two of the shafts based on the sensor readings. The calculator 61 provides the determined shaft speed ratio(s) R to a near-integer-speed-ratio detector 62. The near-integer-speed-ratio detector 62 determines whether or not the determined shaft speed ratio(s) R are within a predetermined distance or interval to an integer value (in particular greater than 1). If this is not the case, the calculator 61 is invoked again. If this is the case, the near-integer-speed-ratio detector 62 triggers a resonance detector 67, e.g., informs the resonance detector 67 about the near-integer status. The near-integer-speed-ratio detector 62 may provide the speed ratio(s) to the resonance detector 67.

An optional state detector 63 may also receive the shaft speeds and/or the shaft speed ratio(s) R, and/or may be triggered, e.g. by the calculator 61. The state detector 63 may determine whether the shafts are in a steady state or in a transient state, e.g. moving at constant speeds or accelerating/decelerating, respectively. Optionally, the resonance detector 67 is only invoked when the state detector 63 determines a predetermined state, e.g. a transient state or a steady state.

One or more vibration sensors 64 are part of the control system 2 and/or the apparatus and are adapted to generate vibration sensor readings indicative for vibrations in the apparatus. The vibration sensor(s) 64 provide the vibration sensor readings to an analyzer 65. The analyzer 65 determines vibration magnitudes (e.g., frequency-dependent, and/or vibration frequencies) based on the vibration sensor readings. When or more vibration magnitudes (e.g. at predetermined vibration frequencies) exceed a threshold stored in a storage 66, the resonance detector 67 is triggered. For example, the analyzer 65 provides the vibration magnitudes to the resonance detector.

Optionally, the resonance detector 67 detects incoming resonances before reaching a maximum.

When the resonance detector 67 is triggered by the near-integer-speed-ratio detector 62 and the analyzer 65, it activates an integer-speed avoidance system 70.

The integer-speed avoidance system 70 is operatively connected with one or more engine controllers 71. The engine controller(s) 71 are adapted to adjust engine parameters, e.g., variable stator vane positions and/or fuel flow. The integer-speed avoidance system 70 may comprise an algorithm to avoid integer speed ratios so as to minimize vibrations while optimizing the engine performance in a flight envelope. Together with the engine controller(s) 71, the integer-speed avoidance system 70 may be adapted to perform the method steps S3, S13 and/or S14 of Figures 5A and 5B.

To ensure high engine performances throughout the whole flight envelope, the integer-speed avoidance system 70 may be adapted to detect if there is any conflict between the achievement of a performance target and the integer speed avoidance. If any disadvantage in regulating the speeds that provokes deterioration in the engine performance is detected, then it may determine whether or not to adjust set points of the engine controller(s) 71. In case the vibration levels trigger the activation of the integer-speed avoidance system 70 due to a detection of an incoming cross shaft resonance, the performance deterioration may be minimized to a given (e.g. the shortest possible) period of time. It may be provided that the integer-speed avoidance system 70 is only allowed to adjust set points of the engine controller(s) 71 when a level of vibration exceeds a given safety threshold.

The integer-speed avoidance system 70 optionally comprises a database 72 storing a plurality of possible operational statuses of the apparatus and appropriate speeds of the shafts for each operational status having no integer ratio. In particular, the database 72 may comprise at least one series of possible successive operational statuses and appropriate speeds of the shafts for each operational status having no integer ratio. By this, integer speed ratios may be prevented from occurring at different operational statuses (see Figure 3) before they occur.

The database 70 may be updated during operation of the apparatus, e.g. a flight of a gas turbine engine, after detecting an integer shaft speed ratio in an operational status.

Additionally, an optional counter 68 may be invoked that performs an algorithm for counting life cycles of the apparatus based on the detected speed ratios and vibration magnitudes. The counted life cycles are stored in a data storage 69 for storing life-consumption data. By this, wear parts of the apparatus may be effectively monitored and the timing of maintenance may be improved. In particular, it is possible to estimate the life consumption caused by cross-shaft system resonances. A complete life estimation may mitigate risks related to unexpected failures in flight and allows a reduction of repairs and unplanned maintenances of fleets.

The control system 2 may be adapted to perform the method according to Figure 5A and/or according to Figure 5B. Accordingly, the methods of Figures 5A and 5B may comprise method steps that correspond to one or more blocks of Figure 7. It is also worth noting that one or more blocks of Figure 7 may be implemented by hardware and/or software, and that one or more blocks of Figure 7 may be combined in one single block.

An optional embodiment of the control system 2 comprises a sensor to sense vibration of the engine; a detector to detect engine performance; a storage to pre-store engine performance data (e.g., fuel consumption, minimum speed, thrust and/or other data) and to pre-store critical vibration data; and a controller that activates a first control means to control the speed of a first shaft of the shafts and/or a second shaft of the shafts based on sensed vibration data; wherein the controller activates a second control means to disable the first control means, if the detected engine performance data is lower than the pre-stored engine performance data, and the controller overrides the second control means and activates the first control means, if the level of vibration in resonance exceeds the pre-stored critical vibration data.

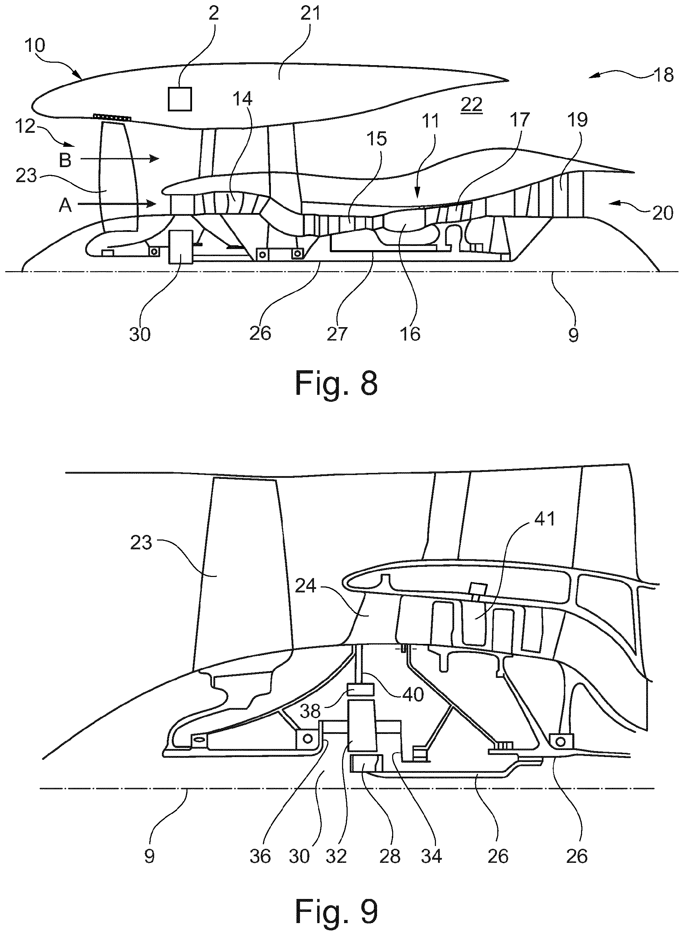

Figure 8 illustrates a gas turbine engine 10 for an aircraft. The gas turbine engine 10 has a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 (low-pressure shaft) and an epicyclic gearbox.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27 (high-pressure shaft). The fan 23 generally provides the majority of the propulsive thrust. The epicyclic gearbox 30 is a reduction gearbox.

The gas turbine engine 10 comprises the control system 2 according to Figure 7 or according to Figure 4

An exemplary arrangement for a geared fan gas turbine engine 10 is shown in Figure 9. The low pressure turbine 19 (see Figure 8) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

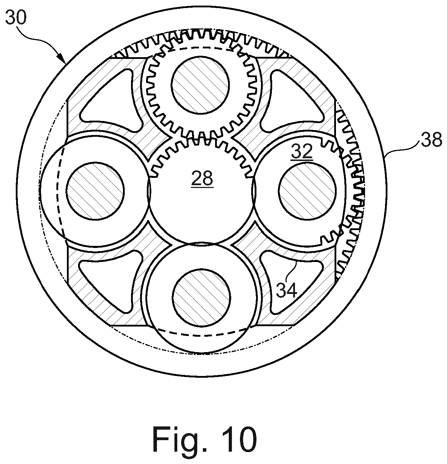

The epicyclic gearbox 30 is shown by way of example in greater detail in Figure 10. Each of the sun gear 28, planet gears 32 and ring gear 38 comprise teeth about their periphery to intermesh with the other gears. However, for clarity only exemplary portions of the teeth are illustrated in Figure 10. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 9 and 10 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 9 and 10 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 9 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 9. For example, where the gearbox 30 has a star arrangement (described above), the skilled person would readily understand that the arrangement of output and support linkages and bearing locations would typically be different to that shown by way of example in Figure 9.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 8 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 8), and a circumferential direction (perpendicular to the page in the Figure 8 view). The axial, radial and circumferential directions are mutually perpendicular.

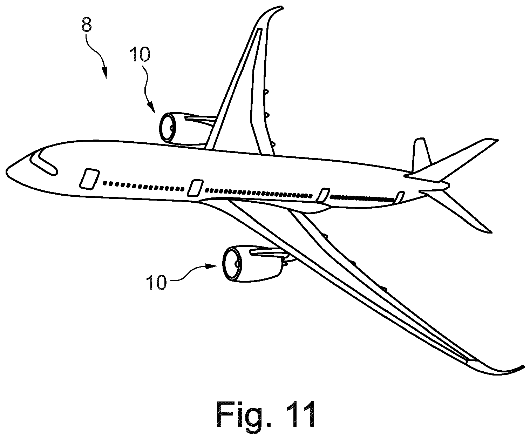

Figure 11 shows an aircraft 8 in the form of a passenger aircraft. Aircraft 8 comprises several (i.e., two) gas turbine engines 10 in accordance with Figures 8 to 10.

The control system and method described herein may actively avoid that two or more shafts of an apparatus run at speeds with integer multiples on one another while maintaining the performance of the apparatus at a given target and, optionally, minimized fuel consumption. The control system and method described herein may actively determine shaft speed ratios and control the rotation of at least one of the shafts based thereon, and/or determine another parameter (e.g. operational status), apply a database that is constructed based on shaft speed ratios and the other parameter, and control the rotation of at least one of the shafts based on the other parameter.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

For example it is worth noting that the control system 2 and method described herein are applicable not only in gas turbine engines but also, e.g., in multi-shaft industrial power plants, rigs or other multi-shaft machinery, e.g., electrical motors or hybrid engines.

It is further worth to mention that, as an optional extension of the method and control system, integer transmission ratios are avoided in a power and/or accessory gearbox, e.g. within the gearbox(es) and/or with reference to a rotating component (e.g. a shaft) of the gearbox (e.g. gearbox 30) and one of the shafts of the engine, (e.g. one of the shafts 26, 27, 54).

### List of reference numbers

- 1: apparatus
- 2: control system
- 8: airplane
- 9: principal rotational axis
- 10: gas turbine engine
- 11: engine core
- 12: air intake
- 14: low-pressure compressor
- 15: high-pressure compressor
- 16: combustion equipment
- 17: high-pressure turbine
- 18: bypass exhaust nozzle
- 19: low-pressure turbine
- 20: core exhaust nozzle
- 21: nacelle
- 22: bypass duct
- 23: propulsive fan
- 24: stationary support structure
- 26: shaft
- 27: interconnecting shaft
- 28: sun gear
- 30: gearbox
- 32: planet gears
- 34: planet carrier
- 36: linkages
- 38: ring gear
- 40: linkages
- 41: variable stator vane
- 50: intershaft bearing
- 51: damping
- 52: bearing
- 53: bearing
- 54: shaft
- 55: bearing
- 56-58: speed sensor
- 61: calculator
- 62: near-integer-speed-ratio detector
- 63: state detector
- 64: vibration sensor(s)
- 65: analyzer
- 66: storage
- 67: resonance detector
- 68: counter
- 69: data storage
- 70: integer-speed avoidance system
- 71: engine controller
- 72: database
- A: core airflow
- B: bypass airflow
- R: speed ratio

## Claims

1. A method for controlling a gas turbine (10) having at least a first shaft (26, 27) and a second shaft (27, 54) that are rotatable with a variable ratio of speeds, the method comprising controlling rotation (S3; S13, S14) of at least one of the shafts (26, 27, 54) depending on a speed ratio (R) of speeds of the shafts (26, 27, 54), **characterized in that** controlling rotation (S3) of the at least one of the shafts (26, 27, 54) depending on the speed ratio (R) is performed so as to avoid an integer ratio of speeds of the shafts (26, 27, 54).

2. The method according to claim 1, wherein controlling rotation (S3) of the at least one of the shafts (26, 27, 54) depending on the speed ratio (R) comprises restricting the rotation of the shafts (26, 27, 54) to predetermined speed ratios.

3. The method according to any of the preceding claims, further comprising determining (S1) a speed of the first shaft (26, 27) and a speed of the second shaft (27, 54).

4. The method according to claim 3, further comprising calculating (S2) a speed ratio (R) of the determined speeds of the first and second shafts (26, 27, 54), wherein controlling rotation (S3) of the at least one of the shafts (26, 27, 54) is performed depending on the calculated speed ratio (R).

5. The method according to claim 4, further comprising determining whether or not the calculated speed ratio (R) is within a predetermined interval around an integer.

6. The method according to any of the preceding claims, wherein controlling rotation (S3) of at least one of the shafts (26, 27, 54) comprises controlling at least one of the shafts (26, 27, 54) so as to increase or decrease its speed.

7. The method according to claim 6, wherein controlling at least one of the shafts (26, 27, 54) so as to increase or decrease its speed is performed by moving (S13) a variable device of the gas turbine (10).

8. The method according to claim 7, wherein the variable device comprises at least one variable stator vane (41).

9. The method according to any of claims 6 to 8, wherein the gas turbine (10) is a gas turbine engine and controlling rotation (S3) of at least one of the shafts (26, 27, 54) comprises incrementing or decrementing (S14) a power setting of the gas turbine engine.

10. The method according to any of the preceding claims, further comprising determining a level of vibrations at the gas turbine (10) and comparing the level of vibrations with a predetermined threshold, wherein controlling rotation (S3) of at least one of the shafts (26, 27, 54) depending on a speed ratio (R) of speeds of the shafts (26, 27, 54) is performed when the level of vibrations exceeds the predetermined threshold.

11. The method according to any of the preceding claims, further comprising providing a database (72) storing a plurality of possible operational statuses of the gas turbine (10) and appropriate speeds of the shafts (26, 27, 54) for each operational status having no integer ratio; and controlling the gas turbine (10) using the database (72).

12. The method according to claim 11, wherein the database (72) comprises at least one series of possible successive operational statuses and appropriate speeds of the shafts (26, 27, 54) for each operational status having no integer ratio.

13. A gas turbine (10) having at least a first and a second shaft (26, 27, 54) that are rotatable with a variable ratio of speeds, and a control system (2) for controlling the gas turbine (10), the control system (2) being adapted to perform the method according to any of the preceding claims.

14. The gas turbine (10) according to claim 13, the control system (2) further comprising a near-integer-speed-ratio detector (62) for detecting a ratio of speeds at or near to an integer and/or further comprising a database (72) storing a plurality of possible operational statuses of the gas turbine (10) and appropriate speeds of the shafts (26, 27, 54) for each operational status having no substantially integer ratio.

15. The gas turbine (10) according to any of claims 13 or 14, further comprising a first speed sensor (56, 57) for determining the speed of the first shaft (26, 27) and a second speed sensor (57, 58) for determining the speed of the second shaft (27, 54).

16. The gas turbine (10) according to any of claims 13 to 15, being a gas turbine engine for an aircraft (8) and comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan (23) so as to drive the fan (23) at a lower rotational speed than the core shaft (26), wherein:
the turbine is a first turbine (19), the compressor is a first compressor (14), and the core shaft is a first core shaft (26);
the engine core (11) further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

## Patentansprüche

1. Verfahren zur Steuerung einer Gasturbine (10) mit zumindest einer ersten Welle (26, 27) und einer zweiten Welle (27, 54), die mit einem variablen Drehzahlverhältnis drehbar sind, wobei das Verfahren Steuern von Rotation (S3; S13, S14) zumindest einer der Wellen (26, 27, 54) in Abhängigkeit von einem Drehzahlverhältnis (R) von Drehzahlen der Wellen (26, 27, 54) umfasst, **dadurch gekennzeichnet, dass** Steuern der Rotation (S3) der zumindest einen der Wellen (26, 27, 54) in Abhängigkeit vom Drehzahlverhältnis (R) durchgeführt wird, um ein ganzzahliges Drehzahlverhältnis der Wellen (26, 27, 54) zu verhindern.

2. Verfahren nach Anspruch 1, wobei Steuern der Rotation (S3) der zumindest einen der Wellen (26, 27, 54) in Abhängigkeit vom Drehzahlverhältnis (R) Beschränken der Rotation der Wellen (26, 27, 54) auf vorbestimmte Drehzahlverhältnisse umfasst.

3. Verfahren nach einem der vorhergehenden Ansprüche, ferner umfassend Bestimmen (S1) einer Drehzahl der ersten Welle (26, 27) und einer Drehzahl der zweiten Welle (27, 54) .

4. Verfahren nach Anspruch 3, ferner umfassend Berechnen (S2) eines Drehzahlverhältnisses (R) der bestimmten Drehzahlen der ersten und der zweiten Welle (26, 27, 54), wobei Steuern der Rotation (S3) der zumindest einen der Wellen (26, 27, 54) in Abhängigkeit von dem berechneten Drehzahlverhältnis (R) durchgeführt wird.

5. Verfahren nach Anspruch 4, ferner umfassend Bestimmen, ob das berechnete Drehzahlverhältnis (R) innerhalb eines vorbestimmten Intervalls um eine ganze Zahl ist oder nicht.

6. Verfahren nach einem der vorhergehenden Ansprüche, wobei Steuern der Rotation (S3) zumindest einer der Wellen (26, 27, 54) Steuern zumindest einer der Wellen (26, 27, 54) umfasst, um ihre Drehzahl zu erhöhen oder zu verringern.

7. Verfahren nach Anspruch 6, wobei Steuern zumindest einer der Wellen (26, 27, 54), um ihre Drehzahl zu erhöhen oder zu verringern, durch Bewegen (S13) einer variablen Vorrichtung der Gasturbine (10) durchgeführt wird.

8. Verfahren nach Anspruch 7, wobei die variable Vorrichtung zumindest eine variable Statorschaufel (41) umfasst.

9. Verfahren nach einem der Ansprüche 6 bis 8, wobei die Gasturbine (10) ein Gasturbinentriebwerk ist und Steuern der Rotation (S3) zumindest einer der Wellen (26, 27, 54) Inkrementieren oder Dekrementieren (S14) einer Leistungseinstellung des Gasturbinentriebwerks umfasst.

10. Verfahren nach einem der vorhergehenden Ansprüche, ferner umfassend Bestimmen eines Niveaus von Schwingungen an der Gasturbine (10) und Vergleichen des Niveaus von Schwingungen mit einer vorbestimmten Schwelle, wobei Steuern der Rotation (S3) zumindest einer der Wellen (26, 27, 54) in Abhängigkeit von einem Drehzahlverhältnis (R) von Drehzahlen der Wellen (26, 27, 54) durchgeführt wird, wenn das Niveau von Schwingungen die vorbestimmte Schwelle überschreitet.

11. Verfahren nach einem der vorhergehenden Ansprüche, ferner umfassend Bereitstellen einer Datenbank (72), die mehrere mögliche Betriebszustände der Gasturbine (10) und angemessene Drehzahlen der Wellen (26, 27, 54) für jeden Betriebszustand, kein ganzzahliges Verhältnis aufweisend, speichert; und Steuern der Gasturbine (10) unter Verwendung der Datenbank (72).

12. Verfahren nach Anspruch 11, wobei die Datenbank (72) zumindest eine Reihe von möglichen aufeinander folgenden Zuständen und angemessenen Drehzahlen der Wellen (26, 27, 54) für jeden Betriebszustand, kein ganzzahliges Verhältnis aufweisend, umfasst.

13. Gasturbine (10) mit zumindest einer ersten und einer zweiten Welle (26, 27, 54), die mit einem variablen Drehzahlverhältnis drehbar sind, und einem Steuerungssystem (2) zum Steuern der Gasturbine (10), wobei das Steuerungssystem (2) dazu angepasst ist, das Verfahren nach einem der vorhergehenden Ansprüche durchzuführen.

14. Gasturbine (10) nach Anspruch 13, wobei das Steuerungssystem (2) ferner einen Detektor für beinahe ganzzahlige Drehzahlverhältnisse (62) zum Detektieren eines Verhältnisses von Drehzahlen bei oder nahe einer ganzen Zahl umfasst und/oder ferner eine Datenbank (72) umfasst, die mehrere mögliche Betriebszustände der Gasturbine (10) und angemessene Drehzahlen der Wellen (26, 27, 54) für jeden Betriebszustand, kein wesentlich ganzzahliges Verhältnis aufweisend, umfasst.

15. Gasturbine (10) nach einem der Ansprüche 13 oder 14, ferner umfassend einen ersten Drehzahlsensor (56, 57) zum Bestimmen der Drehzahl der ersten Welle (26, 27) und einen zweiten Drehzahlsensor (57, 58) zum Bestimmen der Drehzahl der zweiten Welle (27, 54).

16. Gasturbine (10) nach einem der Ansprüche 13 bis 15, die ein Gasturbinentriebwerk für ein Flugzeug (8) ist und Folgendes umfasst:
einen Triebwerkskern (11), umfassend eine Turbine (19), einen Kompressor (14) und eine Kernwelle (26), die die Turbine mit dem Kompressor verbindet;
ein Gebläse (23), stromaufwärts des Triebwerkskerns befindlich, wobei das Gebläse mehrere Gebläseschaufeln umfasst; und
ein Getriebe (30), das einen Eingang von der Kernwelle (26) empfängt und Antrieb für das Gebläse (23) ausgibt, um das Gebläse (23) mit einer niedrigeren Rotationsgeschwindigkeit als die Kernwelle (26) anzutreiben, wobei:
die Turbine eine erste Turbine (19) ist, der Kompressor ein erster Kompressor (14) ist und die Kernwelle eine erste Kernwelle (26) ist;
der Triebwerkskern (11) ferner eine zweite Turbine (17), einen zweiten Kompressor (15) und eine zweite Kernwelle (27), die die zweite Turbine mit dem zweiten Kompressor verbindet, umfasst; und
die zweite Turbine, der zweite Kompressor und die zweite Kernwelle angeordnet sind, um mit einer höheren Rotationsgeschwindigkeit zu rotieren als die erste Kernwelle.

## Revendications

1. Procédé de commande d'une turbine (10) à gaz dotée d'au moins un premier arbre (26, 27) et un deuxième arbre (27, 54) qui peuvent tourner avec un rapport variable de vitesses, le procédé comportant la commande de la rotation (S3 ; S13, S14) d'au moins un des arbres (26, 27, 54) en fonction d'un rapport de vitesses (R) de vitesses des arbres (26, 27, 54), **caractérisé en ce que** la commande de la rotation (S3) de l'au moins un des arbres (26, 27, 54) en fonction du rapport de vitesses (R) est effectuée de façon à éviter un rapport entier de vitesses des arbres (26, 27, 54).

2. Procédé selon la revendication 1, dans lequel la commande de la rotation (S3) de l'au moins un des arbres (26, 27, 54) en fonction du rapport de vitesses (R) comporte la restriction de la rotation des arbres (26, 27, 54) à des rapports de vitesses prédéterminés.

3. Procédé selon l'une quelconque des revendications précédentes, comportant en outre la détermination (S1) d'une vitesse du premier arbre (26, 27) et d'une vitesse du deuxième arbre (27, 54).

4. Procédé selon la revendication 3, comportant en outre le calcul (S2) d'un rapport de vitesses (R) des vitesses déterminées des premier et deuxième arbres (26, 27, 54), la commande de la rotation (S3) de l'au moins un des arbres (26, 27, 54) étant effectuée en fonction du rapport de vitesses (R) calculé.

5. Procédé selon la revendication 4, comportant en outre le fait de déterminer si le rapport de vitesses (R) calculé se trouve ou non à l'intérieur d'un intervalle prédéterminé autour d'un entier.

6. Procédé selon l'une quelconque des revendications précédentes, dans lequel la commande de la rotation (S3) d'au moins un des arbres (26, 27, 54) comporte la commande d'au moins un des arbres (26, 27, 54) de façon à augmenter ou à diminuer sa vitesse.

7. Procédé selon la revendication 6, dans lequel la commande d'au moins un des arbres (26, 27, 54) de façon à augmenter ou à diminuer sa vitesse est effectuée en déplaçant (S13) un dispositif variable de la turbine (10) à gaz.

8. Procédé selon la revendication 7, dans lequel le dispositif variable comporte au moins une aube (41) de stator variable.

9. Procédé selon l'une quelconque des revendications 6 à 8, dans lequel la turbine (10) à gaz est un moteur à turbine à gaz et la commande de la rotation (S3) d'au moins un des arbres (26, 27, 54) comporte l'incrémentation ou la décrémentation (S14) d'un réglage de puissance du moteur à turbine à gaz.

10. Procédé selon l'une quelconque des revendications précédentes, comportant en outre la détermination d'un niveau de vibrations sur la turbine (10) à gaz et la comparaison du niveau de vibrations avec un seuil prédéterminé, la commande de la rotation (S3) d'au moins un des arbres (26, 27, 54) en fonction d'un rapport de vitesses (R) de vitesses des arbres (26, 27, 54) étant effectuée lorsque le niveau de vibrations dépasse le seuil prédéterminé.

11. Procédé selon l'une quelconque des revendications précédentes, comportant en outre la mise en place d'une base (72) de données stockant une pluralité d'états opérationnels possibles de la turbine (10) à gaz et des vitesses appropriées des arbres (26, 27, 54) pour chaque état opérationnel ne présentant aucun rapport entier, et la commande de la turbine (10) à gaz à l'aide de la base (72) de données.

12. Procédé selon la revendication 11, dans lequel la base (72) de données comporte au moins une série d'états opérationnels successifs possibles et des vitesses appropriées des arbres (26, 27, 54) pour chaque état opérationnel ne présentant aucun rapport entier.

13. Turbine (10) à gaz dotée d'au moins un premier et un deuxième arbre (26, 27, 54) qui peuvent tourner avec un rapport variable de vitesses, et d'un système (2) de commande destiné à commander la turbine (10) à gaz, le système (2) de commande étant prévu pour réaliser le procédé selon l'une quelconque des revendications précédentes.

14. Turbine (10) à gaz selon la revendication 13, le système (2) de commande comportant en outre un détecteur (62) de rapport de vitesses quasi-entier destiné à détecter un rapport de vitesses valant ou proche d'un entier et/ou comportant en outre une base (72) de données stockant une pluralité d'états opérationnels possibles de la turbine (10) à gaz et des vitesses appropriées des arbres (26, 27, 54) pour chaque état opérationnel ne présentant aucun rapport sensiblement entier.

15. Turbine (10) à gaz selon l'une quelconque des revendications 13 ou 14, comportant en outre un premier capteur (56, 57) de vitesse destiné à déterminer la vitesse du premier arbre (26, 27) et un deuxième capteur (57, 58) de vitesse destiné à déterminer la vitesse du deuxième arbre (27, 54).

16. Turbine (10) à gaz selon l'une quelconque des revendications 13 à 15, celle-ci étant un moteur à turbine à gaz destiné à un aéronef (8) et comportant :
un générateur (11) de gaz comportant une turbine (19), un compresseur (14), et un arbre principal (26) reliant la turbine au compresseur ;
une soufflante (23) située en amont du générateur de gaz, la soufflante comportant une pluralité d'aubes de soufflante ; et
une boîte (30) de transmission qui reçoit une entrée provenant de l'arbre principal (26) et délivre un entraînement à la soufflante (23) de façon à entraîner la soufflante (23) à une vitesse de rotation plus basse que l'arbre principal (26) :
la turbine étant une première turbine (19), le compresseur étant un premier compresseur (14), et l'arbre principal étant un premier arbre principal (26) ;
le générateur (11) de gaz comportant en outre une deuxième turbine (17), un deuxième compresseur (15), et un deuxième arbre principal (27) reliant la deuxième turbine au deuxième compresseur ; et
la deuxième turbine, le deuxième compresseur et le deuxième arbre principal étant disposés pour tourner à une vitesse de rotation plus élevée que le premier arbre principal.
